# FASCICULE DE BREVET EUROPEEN

(11) **EP 3 172 960 B1**
(45) Date de publication et mention de la délivrance du brevet: **19.02.2020**
(21) Numéro de dépôt: 16200769.4
(22) Date de dépôt: 25.11.2016
(51) Int. Cl.: A01G 9/02, F24F 3/16

(54) **MUR VEGETAL MODULAIRE DEPOLLUANT**
UMWELTREINIGENDE MODULARE PFLANZENWAND
MODULAR POLLUTION-REMOVING PLANT WALL

(30) Priorité: 25.11.2015 FR 1561374
(43) Date de publication de la demande: 31.05.2017
(73) Titulaire: AIRCLEANUP, 75003 Paris (FR)
(72) Inventeur: SIDELSKY, David, 77210 Avon (FR)
(74) Mandataire: Regimbeau

(56) Documents cités:
- EP-A1- 0 478 203
- WO-A1-2014/123722
- JP-A- 2012 120 523
- US-A1- 2013 340 337

## Description

### DOMAINE DE L'INVENTION

La présente invention concerne un dispositif de dépollution de l'air au moyen d'un assemblage de modules permettant la culture de plantes hors sol de façon verticale. Ces modules s'assemblent les uns aux autres afin de former un mur végétal autoportant qui élimine les COV (composés organiques volatiles) grâce à une combinaison de différents substrats enrichis en composé organiques, ventilés par de l'air pollué en COV.

### ETAT DE LA TECHNIQUE

Dans le domaine environnemental, les Composés Organiques Volatiles, dits COV sont de plus en plus pointés du doigt comme les responsables de nombreuses maladies. En effet, les intérieurs des constructions regorgent de matériaux émettant ce type de particules.

Les composés organiques volatiles (COV) sont des substances qui se caractérisent par leur grande volatilité, c'est-à-dire qu'ils émettent des vapeurs même à pression et température ordinaires et donc se répandent aisément sous forme gazeuse dans l'air ambiant des ateliers, des bureaux, des habitations, mais aussi dans les écoles et les crèches.

Les COV sont très nombreux et proviennent des hydrocarbures et de leurs dérivés chimiques. Les COV sont utilisés dans de multiples secteurs professionnels, particulièrement dans les procédés industriels utilisant des solvants (peintures, colles, vernis, encres, traitements de surface, dégraissage, nettoyage à sec) où sont utilisés dans de très nombreux produits pour leurs propriétés intrinsèques (gaz propulseurs, carburants, bactéricides,...).

Les composés organiques volatiles ont des effets très néfastes sur la santé. Par exemple, Les COV aromatiques peuvent provoquer des troubles neurologiques (céphalées, vertiges, agitation, irritabilité, somnolence, convulsions), des affections gastro-intestinales accompagnées de vomissements à répétition, des anémies dues à la toxicité pour les cellules sanguines et la moelle osseuse (benzolisme). Ils sont présents dans divers carburants pétroliers et dans les dissolvants des résines naturelles ou synthétiques, les vernis, peintures, émaux, mastics, encres, colles, produits d'entretien...

Le formaldéhyde (formol) est un COV répandu, présent dans de nombreux liants, bactéricides, fongicides, peintures, dans les industries d'ameublement, il est très irritant et souvent responsable de réactions allergiques. Les maladies allergies induites sont l'asthme, épisodes successifs ou le rejet de l'air est difficile et pénible, la rhinite ou conjonctivite avec éternuements, écoulement nasal, larmoiements, oedème des paupières, picotements laryngés... Le perchloréthylène, qui est le solvant le plus souvent utilisé dans les pressings pour nettoyer les vêtements, a un effet cancérogène suspecté et ce solvant chloré provoque des problèmes respiratoires en cas d'inhalation répétée. Le trichloréthylène, d'usage courant pour le dégraissage, a une toxicité sur le système nerveux central et le cœur.

Par ailleurs, en se dégradant dans l'atmosphère sous l'effet des rayonnements du soleil et de la chaleur, ils provoquent la formation ou l'accumulation dans l'environnement de composés nocifs, comme l'ozone.

L'impact des COV sur l'homme se fait de manière directe. La pénétration des COV se fait par inhalation mais aussi par contact cutanée. Lors de l'inhalation de COV (particulièrement les solvants), ceux-ci pénètrent dans les poumons et passent directement dans le sang, puis dans le cœur et le cerveau. Certains COV traversent le tissu lipo-cutané et, par voie sanguine, se diffusent dans le corps entier.

La plupart des COV (à l'exception de solvants chlorés tels que les trichloroéthanes, chlorure de méthylène, perchloréthylène, trichloréthylène) dégagent à leur surface, avant même d'avoir atteint leur température d'ébullition, des vapeurs combustibles qui s'enflamment et/ou explosent au contact d'une source de chaleur importante (étincelle, flamme, surface brûlante...) au-delà d'une certaine concentration. Ce risque grave d'incendie/explosion est d'autant plus grand que ces vapeurs sont généralement plus lourdes que l'air et circulent donc près du sol, et peuvent former avec l'air des mélanges explosifs en présence d'une étincelle provoquée par une prise électrique défectueuse ou un court-circuit (cas des vapeurs d'hydrocarbures aromatiques par exemple). L'énergie électrique, du fait des étincelles et échauffements dus aux fonctionnements des moteurs, des arcs dus aux coupures, est potentiellement dangereuse dans tous les locaux industriels où sont fabriqués, transformés ou stockés un grand nombre de COV tels que les carburants, peintures, vernis, colles, résines, produits d'entretien.

Tous ces risques ont attiré l'attention des instances gouvernementales qui ont déployé un ensemble complexe de mesures visant à réduire les émissions de COV. Ainsi, notamment en France, plusieurs lois ont été promulguées visant à réduire :
- les émissions de COV dans les installations existantes,
- l'utilisation de solvants dans certaines activités industrielles,
- la concentration de certains composés dans les produits de grande consommation, etc.

La suppression des COV apparaît comme un problème prioritaire, aussi bien dans le milieu professionnel, déjà réglementé que dans les habitations ou les bâtiments accueillant du public.

Il est connu d'utiliser des micro-organismes dans un substrat pour digérer des composés organiques volatiles. Le micro-organisme le plus souvent mentionné dans les diverses publications est le genre *Pseudomonas.* Notamment, une publication de Swanson & Loert (1997) conseille un ensemencement avec 106 cellules de *Pseudomonas putitas* par gramme de substrat pour garantir le succès du processus de cométabolisation.

On sait également que les champignons, lorsqu'ils sont utilisés de manière conjointe à des bactéries, augmentent la capacité de dépollution de l'ensemble (Malhautier et al. 2005). Les champignons ont la capacité de minéraliser les COV même dans des conditions extrêmes de température, de pH et dans un milieu pauvre en nutriments (René et al 2010).

Plusieurs études récentes ont montré que la capacité d'élimination avec des bioréacteurs fongiques était plus élevée qu'avec des systèmes bactériens comparables (Woertz & Kinney 2004).

Des biofiltres sont donc souvent inoculés avec des champignons. Par exemple, le champignon *Phanerochaete chrysosporium* va minéraliser une partie du benzène et du toluène en CO2 (12 et 15% respectivement) (Yadav & Reddy 1993). Une étude (Kennes & Veiga 2004) indique que les meilleurs résultats de dégradation sont obtenus en présence d'un mélange de bactéries et de champignons, mais uniquement lorsque les champignons sont dominants. Il n'est pas certain par contre que les champignons puissent métaboliser une gamme de polluants aussi importante que la plupart des bactéries (Kennes & Veiga 2004).

Les micro-organismes présents dans les biofiltres produisent leur énergie soit à partir de l'oxydation des polluants, soit en cométabolisant les polluants par des enzymes non spécifiques (Swanson & Loerth 1997). D'une manière générale, les COV constituent la principale source de carbone et d'énergie pour le métabolisme des bactéries aérobies. Ces COV sont transformés en CO2, eau et biomasse (Delhoménie et al. 2002).

Par ailleurs, il est connu, par exemple du document WO2010/033423 de combiner des plantes et des micro-organismes pour que les micro-organismes digèrent les COV, et que les produits de digestion des COV nourrissent à leur tour les plantes.

De plus, le document WO2014/123722 décrit un système de culture de végétaux permettant de dépolluer l'air tout en irrigant les plantes.

Enfin, on connaît du document FR2959387 une structure de mur végétal modulaire. Cependant ce mur végétal ne permet pas de dépolluer de l'air et en particulier de le débarrasser des Composés Organiques Volatiles qu'il contient.

### RESUME DE L'INVENTION

A partir de ce qui est exposé, un but de l'invention est de réaliser un mur végétal intérieur dépolluant. En offrant un large choix de plantes, qui soit esthétique, la verticalité offrant un gain de place par rapport à des installations horizontales, suffisantes pour dépolluer les COV d'un volume abritant des activités humaines, tel que logements, bureaux, gymnases, industries, écoles, administrations, etc.

En particulier, un des buts de l'invention est de remédier à au moins certains inconvénients des dispositifs précités en ayant dans une même structure des bactéries et des champignons aérobies vivants aux seins des racines avec une variété desdits organismes vivants.

Un autre but de l'invention est de dépolluer l'air ambiant des COV sans déplacer le problème, les résidus captés étant jusqu'alors incinérés ou détruits. Au contraire, l'invention a pour but de totalement recycler les COV, les résidus étant digérés par les plantes en fin de cycle sous forme d'écosystème.

Un des buts de l'invention est de créer un bio-filtre écologique et particulièrement esthétique, qui devient un élément architectonique, habillant les murs intérieurs d'un local à usage industriel, d'habitation individuel ou collective.

Un autre but de l'invention est de donner un maximum de souplesse dans son aspect esthétique, sous la forme d'un mur végétal, droit ou courbe, mais aussi sous forme de péristyle, colonne ou périptère, s'adaptant à des dimensions précises, l'invention permettant d'avoir des largeurs modulables.

Un autre but de l'invention est de permettre un transport, un stockage et une mise en place facile et économique de l'invention, sur tous types de murs.

Un autre but de l'invention est de limiter au maximum la surface de substrat en contact avec l'extérieur, pour minimiser l'évaporation et éviter que les COV ne s'échappent du substrat avant d'avoir été digérés par les bactéries et champignons aérobies, et pour minimiser l'entretien dû à la prolifération de mauvaises herbes.

Un autre but de l'invention, est de diffuser les COV captés au sein des racines des plantes dans un substrat à l'abri de la lumière, empêchant ainsi la dégradation des COV par la lumière artificiel, ou les UV de la lumière naturelle.

Un autre but de l'invention est d'utiliser la différence thermique entre le métal, et l'air ambiant pour récupérer par condensation naturelle, la vapeur d'eau contenue dans l'air ainsi que l'évapotranspiration naturelle des plantes.

Un autre but de l'invention est de pouvoir récupérer les eaux de percolation pouvant contenir des COV solubles, pour être ré-injecté dans le système d'irrigation, jusqu'à leur élimination par le mélange de bactéries et champignons aérobies appropriés.

Un autre but de l'invention est d'offrir un large choix esthétique, que ce soit par la couleur de la structure, ou dans la composition des plantes utilisées. Ainsi que par des accessoires ornementaux structurels, comme la gouttière de récupération.

Un autre but de l'invention est de protéger les racines des agressions extérieures.

Un autre but de l'invention est de pouvoir végétaliser de grande surface dans un projet architectural, permettant ainsi de répondre à un CCTP (Cahier des Clauses Techniques Particulières) qui est un document contractuel qui rassemble les clauses techniques d'un marché public ; il est rédigé par l'acheteur et fait partie des pièces constitutives du marché public qui oblige souvent à un certain nombre de mètres carrés d'espace vert dans un projet.

Un autre but de l'invention est de purifier l'air par un apport en oxygène et de fixer le CO₂ de l'air par la photosynthèse naturelle des plantes.

Un autre but de l'invention est de pouvoir changer facilement le système d'irrigation et de ventilation dans le cadre de sa maintenance habituelle, sans démonter l'installation.

Un autre but de l'invention est de pouvoir ensemencer le substrat des bactéries aérobies et champignons selon les COV à traiter et de pouvoir changer cet ensemencement selon l'air à traiter dans le local abritant l'installation.

Un autre but de l'invention est de faire disparaître l'effet de dallage qu'entraînent les jointures d'un module à l'autre dans une structure connue de mur végétal, car cet effet rompt la composition de plantes et donne un aspect inesthétique.

A cet égard, l'invention a pour objet un dispositif de dépollution d'air, selon la revendication 1, comprenant :
- au moins un module de culture de végétaux, chaque module comprenant au moins une paroi apte à être fixée à un mur vertical, et une cavité interne,
- un substrat apte à être placé dans la cavité interne du module,
- un circuit d'irrigation du substrat adapté pour acheminer de l'eau dans la cavité interne du module,
- un circuit de ventilation du substrat adapté pour prélever de l'air pollué d'une source d'air pollué et pour acheminer l'air pollué dans la cavité interne du module,
- un conduit d'alimentation s'étendant dans la cavité interne d'un module en débouchant dans ladite cavité par au moins un orifice, définissant autour dudit orifice une zone dite ventilée tandis que le reste de la cavité est une zone dite neutre, ledit conduit d'alimentation étant commun au circuit d'irrigation et au circuit de ventilation, et
- une mèche humidifiée ou une corde à noeuds imputrescible disposée dans le conduit d'alimentation, le dispositif étant caractérisé en ce que le conduit d'alimentation est un tuyau configuré pour générer des micro-bulles d'air pollué humide de manière à ventiler la zone ventilée.

Avantageusement, mais facultativement, le dispositif de dépollution selon l'invention peut en outre comprendre au moins l'une des caractéristiques suivantes :
- le substrat comporte une base nutritive, et des micro-organismes adaptés pour dégrader des composés organiques volatiles contenus dans de l'air en nutriments pour la croissance des plantes, lesdits micro-organismes comprenant des bactéries et/ou des champignons,
- chaque conduit d'alimentation est un tube microporeux,
- le circuit d'irrigation comprend en outre un réservoir de solution de bactéries aérobies et un réservoir de solution de champignons, et le dispositif de dépollution d'air comprend en outre une unité de contrôle adaptée pour sélectivement faire circuler dans le conduit d'alimentation au moins l'un parmi le groupe comprenant :
   ∘ de l'eau,
   ∘ de l'air pollué prélevé de la source,
   ∘ de la solution de champignons solubles,
   ∘ de la solution de bactéries aérobies solubles,
- chaque module comporte, de part et d'autre de la paroi, deux platines de fixation de largeur différentes pour la fixation au mur vertical,
- chaque platine comprend une au moins une fente s'étendant sur toute la largeur de la platine,
- le substrat est contenu dans un sac formé d'une paroi étanche et opaque, le sac pouvant être positionné de manière amovible dans la cavité interne d'un module,
- le dispositif comprend au moins deux modules joints bord à bord horizontalement, dans lequel la paroi de chaque module comprend une pluralité d'ouvertures traversantes adaptées pour autoriser la croissance de plantes hors de la cavité interne du module, deux ouvertures adjacentes horizontalement d'un même module étant distantes d'une distance constante, et dans lequel la distance entre deux ouvertures adjacentes horizontalement de deux modules consécutifs est inférieure ou égale à la distance entre les ouvertures d'un même module,
- le dispositif comprend une pluralité de modules assemblés les uns au-dessus des autres, chaque module comprenant un sac rempli de substrat, le fond du sac étant perforé pour autoriser l'écoulement de fluide d'un module à l'autre, et le dispositif comprend en outre une gouttière de récupération disposée en-dessous du module inférieur.

L'invention se rapporte en outre à un procédé d'installation selon la revendication 10 d'un dispositif de dépollution d'air tel que défini précédemment, dans lequel la paroi de chaque module comporte une pluralité d'ouvertures circulaires traversantes adaptées pour autoriser la croissance de plantes hors de la cavité interne d'un module, et le substrat est contenu dans un sac étanche, le procédé comprenant :
- la mise en place d'un sac de substrat dans la cavité interne d'un module,
- l'incision du sac de substrat au niveau de chaque ouverture de la paroi du module et le retrait, par chaque ouverture de la paroi, d'une portion semi-circulaire de la paroi du sac en regard d'une moitié supérieure de l'ouverture correspondante, et
- la déformation de la paroi du sac pour former, au travers de chaque ouverture de la paroi, une poche en surplomb de ladite paroi.

L'invention se rapporte également à un procédé de dépollution d'air selon la revendication 11 à l'aide d'un dispositif de dépollution d'air tel que défini précédemment, dans lequel la paroi de chaque module comporte une pluralité d'ouvertures circulaires traversantes adaptées pour autoriser la croissance de plantes hors de la cavité interne d'un module, et le substrat est contenu dans un sac étanche, le procédé consistant à injecter de l'air pollué à partir de la source d'air pollué dans le circuit de ventilation, à une pression prédéterminée de sorte à créer à l'intérieur du substrat d'une part une zone ventilée dans laquelle l'air pollué issu du circuit de ventilation circule dans le substrat sous la forme de micro-bulles, et d'autre part une zone neutre dans laquelle l'air pollué issu du circuit de ventilation ne circule pas dans le substrat. L'invention offre un rendement supérieur à l'art antérieur, de par l'enrichissement du substrat, nécessaire au développement des plantes, en organismes vivants aérobies sous forme de bactéries digérant les COV et polluants présent dans l'air, combiné avec des champignons qui vont eux-mêmes utiliser le résidu de cette première digestion comme substrat de développement et ainsi transformer au final les COV en matières organiques nécessaires au développement des plantes (engrais naturel). Une double symbiose est ainsi favorisée : d'une part entre la plante et les bactéries, et d'autre part entre les bactéries et les champignons, cette double-symbiose est nommée cométabolisation. En effet les bactéries biodégradent les COV en cosubstrat permettant le développement des champignons. Cette interaction est à considérer lorsqu'un cosubstrat présent dans le système n'intervient pas dans la croissance des microorganismes, mais nécessite la présence d'un substrat favorisant la croissance (sous entendue microbienne), pour être biodégradé.

Ce mélange de bactéries et de champignons aérobies colonise le substrat nécessaire au développement des plantes. Mais les bactéries d'une part, et les champignons d'autre part, ont des besoins en air différents. L'invention propose une ventilation particulière du substrat qui augmente le rendement de dépollution et la pérennité des micro-organismes colonisant le substrat ainsi que des plantes. Ceci est obtenu en divisant chaque module en deux zones : une zone neutre et une zone ventilée par micro-bulles d'air.

L'invention propose une ventilation par micro-bulles grâce à un tuyau microporeux ayant une triple fonction. La première fonction consiste à utiliser le tuyau microporeux pour alimenter en eau le substrat. La seconde fonction permet d'ensemencer le substrat du mélange de bactéries et de champignon aérobies (soluble dans l'eau). La troisième permet d'amener l'air polluée au sein des racines en respectant les besoins en air et COV des micro-organismes qui colonisent le substrat suivant les deux zones précédemment citées. Il est à noter que le tuyau microporeux est une des options à la disposition de l'homme du métier pour une ventilation par micro-bulles. L'objet de l'invention ne saurait par conséquent être limité à ce type de tuyau. Il est en effet également possible d'envisager une ventilation par micro-bulles au moyen d'un tuyau en matière tissu à mailles serrées, ou d'un tuyau micro perforé, ou même de tuyaux en béton cellulaire, céramique ou pierre ponce.
Les échanges chimiques se font principalement au niveau des racines (plus de 80%). Certaines plantes au pouvoir hautement dépolluant ont besoin d'un substrat au Ph acide pour se développer. D'autres plantes ont au contraire ont besoin d'un substrat au Ph neutre voire basique. De par son apport en air au niveau des racines de manière douce le substrat peut être totalement confiné dans un compartiment fermé. L'invention propose donc une compartimentation verticale permettant d'avoir côte à côte des substrats au Ph très différents sans échanges chimiques d'une colonne de module vertical à l'autre. Les modules verticaux n'ayant aucun contact les uns avec les autres modules adjacents.

Chaque compartiment pourra être ensemencé avec les bactéries et champignons correspondant au Ph de chaque substrat. Sur une même installation comportant plusieurs modules verticaux, ont aura, une diversité de micro-organismes, de substrats et de plantes élargissant le nombre de polluants captés et digérés, qu'il s'agisse de COV aromatiques (benzène, toluène, xylène, styrène, etc.) mais aussi de COV chlorés (perchloréthylène, trichloroéthane, chlorure de méthylène et trichloréthylène) ainsi que le formaldéhyde. Les bactéries et champignons ayant déjà été étudiés en fonction des polluants dans l'art antérieur, le choix de ces derniers peut être adapté aux besoins des différents environnements recevant l'invention (piscine, gymnase, industrie).

L'invention propose une solution facile à mettre en oeuvre pour que la cométabolisation s'opère grâce à sa ventilation compartimentée permettant à la fois aux racines de se développer ainsi qu'aux micro-organismes de coloniser le substrat en s'harmonisant selon les zones de ventilation. L'invention permet de faire des installations de grande taille, comme par exemple les murs d'un gymnase à un coût très compétitif de par la simplicité de ses composants.

L'invention est composée de compartiments fermés. Les COV (extrêmement volatiles) diffusés dans les micro-bulles d'air, ne peuvent plus s'échapper dans l'atmosphère sans être décomposés par les bactéries, grâce à un débit d'air adapté et modulable. Comme la vaporisation des COV dans l'atmosphère contribue à la production d'ozone dans la troposphère par réaction photochimique, l'invention garde les COV bien à l'abri de la lumière depuis leur captation jusqu'à leur diffusion au sein des racines, évitant ainsi une pollution par l'ozone supplémentaire.

Le tuyau microporeux, ou tout autre tuyau configuré pour générer des microbulles, au contact des racines des plantes étant souple, offre, avec sa triple fonction un calepinage du mur modulable où les entraxes verticaux de fixation sont variables, s'adaptant ainsi avec précision aux côtes désirées.

Le tuyau microporeux, ou tout autre tuyau configuré pour générer des microbulles, diffuse en alternance de l'eau et de l'air par basse et moyenne pression, l'air reste humide évitant un assèchement excessif des racines, grâce à une mèche humidifiée ou une corde imputrescible placée à l'intérieur du tuyau microporeux, ou de tout autre tuyau configuré pour générer des microbulles, qui par capillarité garde l'eau. L'air expulsé reste donc humide jusqu'au prochain cycle d'arrosage.

Le compartimentage vertical de l'invention permet de limiter l'évaporation de l'eau contenue dans le substrat (due à l'arrosage des plantes), ainsi que l'évapotranspiration naturelle des plantes au niveau racinaire. En effet au niveau des microbulles d'air l'évaporation de l'eau est favorisée dans un premier temps, mais la condensation au niveau des zones neutres est accentuée, harmonisant ainsi l'hydrométrie de chaque module.

Cette distillation naturelle contribue à la fois à réduire considérablement la consommation en eau mais contribue aussi à la dépollution de l'air, particulièrement pour les COV solubles comme le formaldéhyde.

D'autres caractéristiques et avantages de l'invention apparaîtront dans la description détaillée à suivre.

### BREVE DESCRIPTION DES DESSINS

D'autres caractéristiques, buts et avantages ressortiront de la description qui suit, qui est purement illustrative et non limitative, et qui doit être lue en regard des dessins annexés sur lesquels :
- La figure 1 illustre schématiquement, en coupe transversale, un exemple de module comprenant un sac de substrat.
- Les figures 2a et 2b illustrent respectivement l'irrigation et la ventilation d'un module par un conduit d'alimentation vu en coupe transversale.
- La figure 3 illustre un dispositif de dépollution selon un mode de réalisation de l'invention.
- La figure 4 est une vue en perspective d'un détail d'un module dans sa partie supérieure au niveau de l'entrée des tuyaux microporeux dans le substrat.
- La figure 5 est une vue en perspective d'un détail d'un module dans sa partie inférieure au niveau de la percolation des fluides.
- La figure 6 est une vue en perspective d'un assemblage de modules sur un mur courbe.
- La figure 7 illustre des exemples d'assemblages de deux modules en vue en coupe transversale.
- La figure 8 représente deux variantes d'assemblages d'un même nombre de modules sur un mur droit.

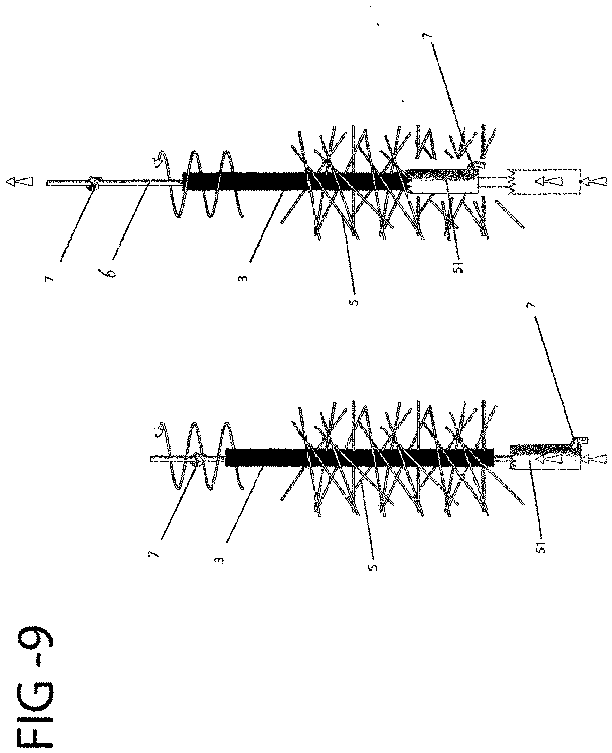

- La figure 9 illustre schématiquement le principe de maintenance pour changer un tuyau microporeux.

### DESCRIPTION DETAILLEE D'AU MOINS UN MODE DE REALISATION DE L'INVENTION

Conformément à l'invention, il est proposé un dispositif de dépollution de l'air, sous forme d'un bio filtre particulièrement esthétique, puisque ce dispositif comprend un mur végétal modulaire. Ce dispositif sous forme de mur végétal intérieur modulaire multi-substrat à large spectre dépolluant sans résidu hors sol est composé de quatre éléments principaux:
- au moins un module 10,
- un circuit de ventilation 29,
- un circuit d'irrigation 9, et
- un substrat 4, destiné à être placé dans chaque module.

Chaque élément offre chacune des variantes de tailles, de formes et de fonctions.

### Module

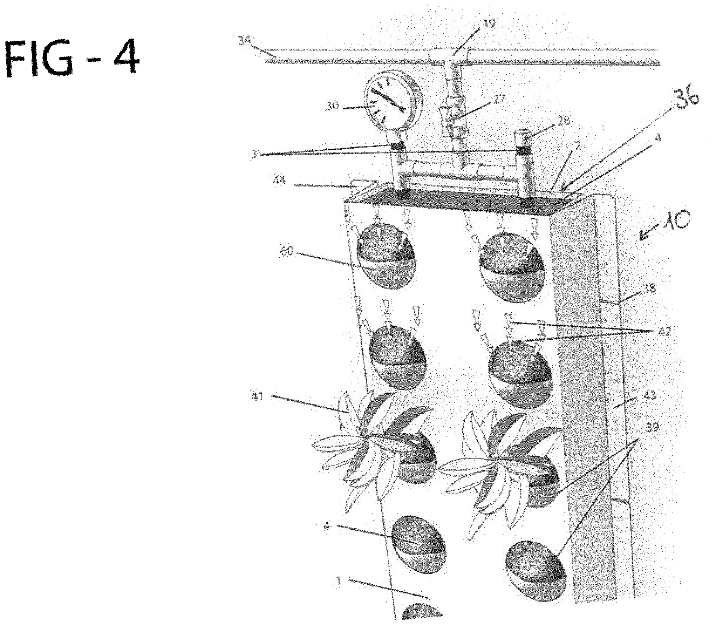

En référence aux figures 4 à 6, le dispositif de dépollution est composé d'au moins un module 10 comprenant une paroi 1 percée d'orifices 39 traversants. La paroi 1 est adaptée pour être fixée à un mur d'appui 50. Le module comporte en outre une cavité interne 36. Cette cavité 36 est avantageusement délimitée sur trois côtés par la paroi 1, et sur un quatrième par le mur d'appui 50. A cet égard, la paroi 1 est avantageusement une plaque mince découpée aux dimensions voulues, et repliée sur deux côtés opposés pour former des rabats latéraux délimitant la cavité interne latéralement.

La paroi 1 est avantageusement métallique pour maximiser les échanges thermiques entre le substrat et l'extérieur et favoriser la condensation d'eau sur la paroi.

La cavité interne 36 du module permet de loger le substrat 4. Comme visible sur la figure 4, les orifices traversants 39 servent à planter des plantes 41 dans le substrat au travers de ces orifices, les racines 5 des plantes se trouvant ainsi dans le substrat, à l'intérieur du module, et le reste de la plante pouvant croitre hors du module, formant ainsi un mur végétal esthétique.

Une des originalités du module de base est que les orifices traversants 39 se répètent selon un pas, c'est-à-dire que les orifices sont répartis avec une distance constante d'un orifice à l'orifice adjacent, que ce soit dans la direction horizontale ou dans la direction verticale. L'organisation des orifices forme ainsi un motif que l'on peut répéter selon la dimension souhaitée pour le module. Par exemple, la hauteur du module peut être adaptée facilement en reproduisant verticalement le nombre d'orifices sur la hauteur voulue.

Les modules s'assemblent les uns à côté des autres longitudinalement en appuis sur un mur 50 et/ou les uns au-dessus des autres.

En référence aux figures 4 à 7, chaque module 10 comprend les éléments suivants pouvant observer des variantes de formes :
- Orifices 39 pour le passage des plantes
- Orifices 61 pour fixer des entretoises
- platines de fixation 43, 44
- Fentes de fixation 38

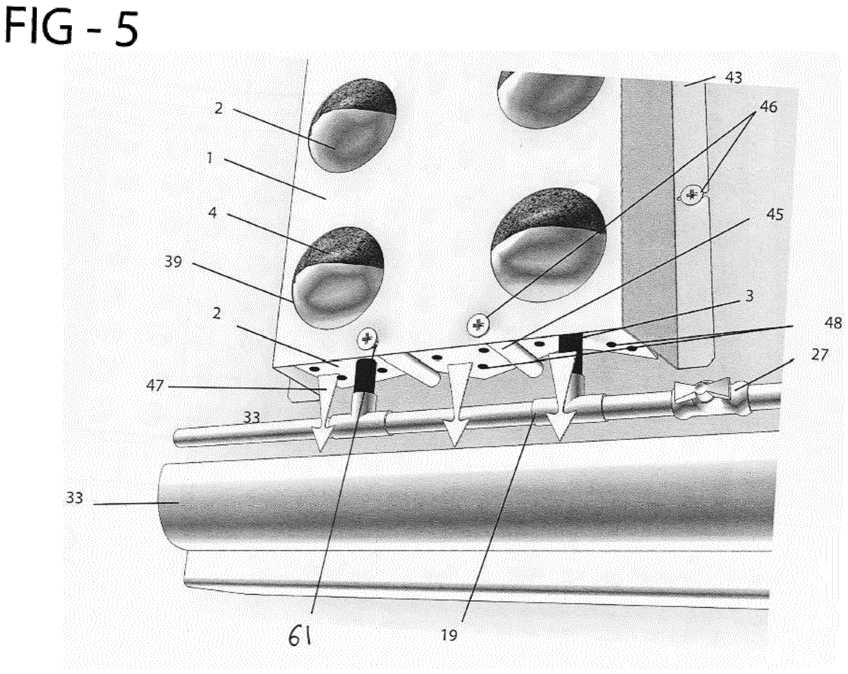

Comme on l'a indiqué ci-avant, chaque module 10 est formé par la fixation d'une paroi 1 à un mur 50. Par conséquent, la cavité interne d'un module est ouverte à la base de celui-ci. Afin de pouvoir positionner un module en hauteur tout en contenant le substrat à l'intérieur du module, chaque module comporte des entretoises 45, représentées sur la figure 5.
Pour les fixer, la paroi 1 comprend des orifices traversants 61 permettant de monter des vis 46 pour solidariser les entretoises à la paroi.

Comme décrit plus en détails ci-après, le substrat 4 est avantageusement contenu dans un sac 2 qui est disposé à l'intérieur de la cavité interne 36 d'un module et qui repose sur les entretoises 45.

De plus, chaque module comprend des platines de fixation 43, 44 au mur support. Ces platines s'étendent donc selon un plan vertical. Avantageusement, comme représenté sur la figure 5, chaque platine est formée intégralement avec la paroi 1, par exemple dans le prolongement des rabats latéraux de la paroi fermant latéralement la cavité interne.

Chaque platine de fixation comprend au moins une fente de fixation ajustable 38 qui peut avoir des formes diverses. Cependant, la fente 38 s'étend avantageusement transversalement à la direction principale d'une platine de fixation, c'est-à-dire sensiblement horizontalement quand le module est en place contre le mur, afin d'autoriser une plus grande plage de positions possibles pour la fixation du module.
Avantageusement, la fente de fixation 38 est disposée à la même hauteur sur plusieurs modules de manière à ce qu'une fente d'un module puisse être superposée à une fente d'un module adjacent. Ainsi on peut facilement fixer deux modules en superposant les platines de fixation lorsqu'ils sont placés côte à côte.

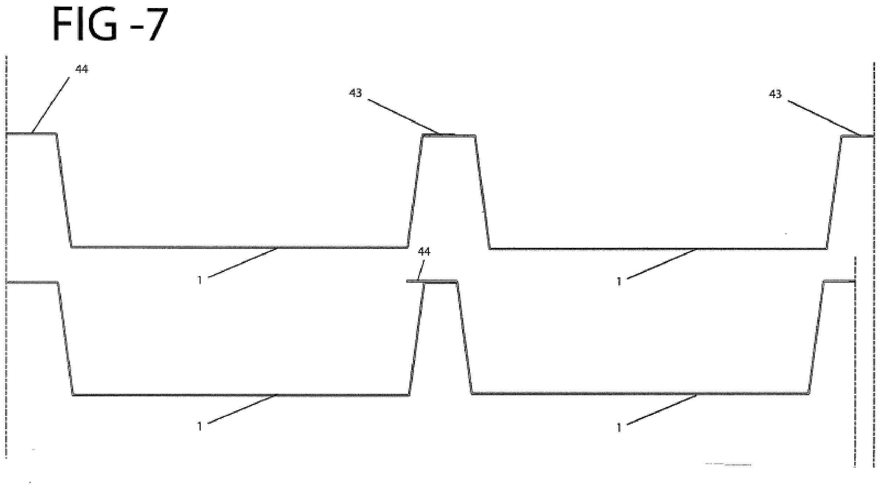

Avantageusement, en référence à la figure 7, les platines de fixation 43 et 44 de chaque côté d'un module présentent avantageusement deux largeurs différentes.

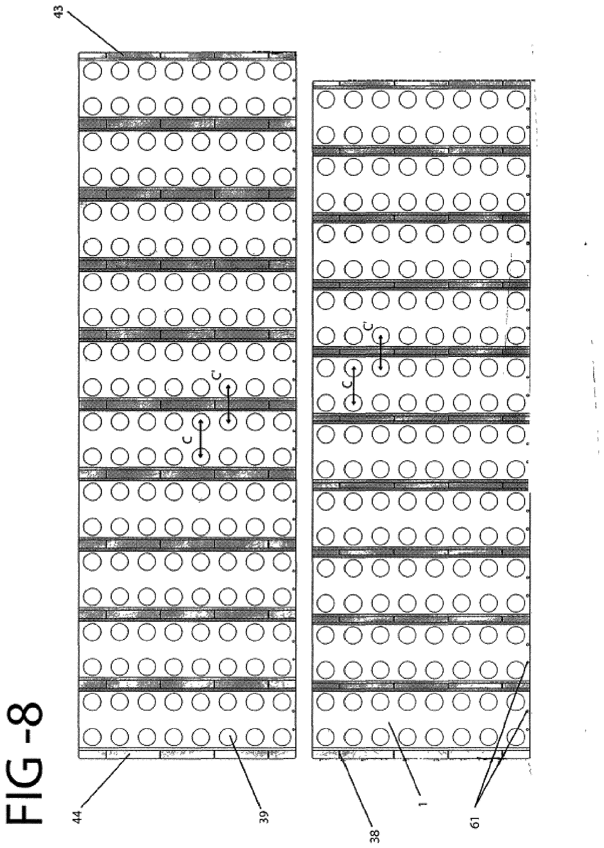

Ainsi, comme représenté sur la figure 8, lorsque l'on souhaite assembler deux modules côte à côte, selon qu'on positionne la platine la plus courte 43 au-dessus ou en-dessous de l'autre en butée, on peut varier la largeur d'un mur végétal. De préférence, la platine la plus courte 43 présente une largeur supérieure à un seuil en deçà duquel la distance entre deux orifices 39 de deux modules adjacents est insuffisante pour l'épanouissement des plantes. Cette distance minimale est par exemple de 30 cm.

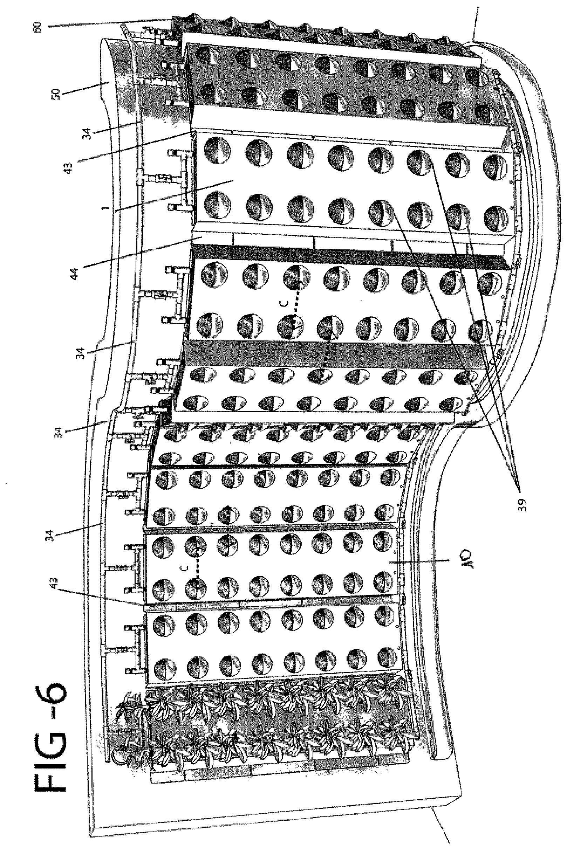

En effet, comme dans la figure 7, lorsque la platine de fixation courte 43 est sur la platine de fixation la plus large 44 en butée contre cette dernière, la distance minimale entre deux modules 55 est atteinte. Par contre, lorsque la platine de fixation courte 43 est sous la platine de fixation la plus large 44 en butée contre cette dernière, la distance maximale entre deux modules 56 est atteinte en respectant la règle « anti-jointure » suivante : la distance C' entre deux ouvertures 39 adjacentes appartenant à deux modules adjacents est inférieure ou égale à la distance C entre deux ouvertures 39 adjacentes d'un même module, quelle que soit la configuration du mur, c'est-à-dire que le mur soit courbe (figure 6) ou droit (figure 7), et quelle que soit la disposition relative des deux platines. En d'autres termes, C'≤ C afin que l'effet esthétique soit parfait dès le jour de la plantation, aucune jointure n'est alors visible, tout en laissant un accès aux fixations au niveau des fentes dans les platines.

### Le substrat

Comme indiqué précédemment, le substrat 4 est avantageusement contenu dans un sac 2 pour son installation dans un module. Le sac de substrat 2 est un sac souple, étanche, résistant à un PH entre 4 et 7,5. Le sac est en outre de taille adaptée à la taille d'un module. En effet, il doit rentrer dans la cavité interne d'un module par le haut du module, et, par frottement léger, rester maintenu sur les entretoises. Avantageusement, la hauteur du sac n'excédera pas 150 cm, pour une bonne homogénéisation de l'irrigation.
De plus, le sac est de couleur noire et opaque pour éviter que la lumière ne rentre au contact des racines ou de l'air pollué aux COV à aucun moment.

Comme visible sur la figure 4, le sac une fois en place dans la structure est rempli du substrat 2, puis il est découpé au niveau de chaque orifice 39 de passage des plantes 41 de la paroi du module, sous forme d'une incision semi-circulaire suivant un demi-cercle correspondant au diamètre des orifices 39 de passages des plantes. Le demi-disque souple restant du sac est plié en deux puis glissé au travers d'un orifice de la paroi du module et ouvert afin de former une poche 60 en surplomb par rapport à la paroi 1 du module.

Le substrat 4 contenu dans le sac formant lui aussi un surplomb, il va recevoir les gouttes d'eau résultant de la condensation due au choc thermique entre le métal et le substrat. Ces gouttes 42 ruisselant par gravité sont en grande partie absorbées par le substrat, limitant ainsi l'arrosage des plantes.

En référence à la figure 5, une fois le sac 2 rempli de substrat 4, son fond est perforé en de multiples emplacements 48, pour drainer le substrat et permettre ainsi aux fluides de s'écouler par gravitation. Si plusieurs modules sont positionnés les uns au-dessus des autres, les fluides peuvent s'écouler d'un module à l'autre. En outre le dispositif de dépollution comprend, à la base du module inférieur (celui situé le plus près du sol), une gouttière de récupération 33. Les fluides peuvent donc s'écouler en dehors du sac et être récupérés par la gouttière.

Le sac 2 peut, de par sa composition, être suffisamment résistant pour être transporté déjà rempli de son substrat. De plus, le sac étant étanche, il empêche les COV de se propager à l'extérieur du module et les oblige au contraire, les COV étant plus lourds que l'air, à descendre de module en module en suivant le chemin de l'eau afin d'être digérés par les bactéries aérobies présentes dans le substrat sur toute la hauteur de la succession de modules.

Le substrat 4 comprend une base ou milieu nutritif, et des microorganismes tels que bactéries et champignons adaptés pour dégrader les COV et pour nourrir les plantes 41 qui y sont plantées grâce aux produits de dégradation résultants.

Le milieu nutritif (ou base) peut être composé par exemple d'un mélange comprenant au moins 30% de granulat inerte de type pouzzolane, billes d'argile, perlite, vermiculite, etc. Ce granulat laisse des interstices où l'air reste même si le substrat est tassé.
Le milieu nutritif peut comprendre en outre 5 % de tourbe blonde, riche en macro et micro éléments nécessaires à la croissance des plantes.
Le milieu nutritif peut aussi comprendre 40 % de fibres de coco, et 2 % de matériau rétenteur d'eau, comme par exemple de la laine de roche.

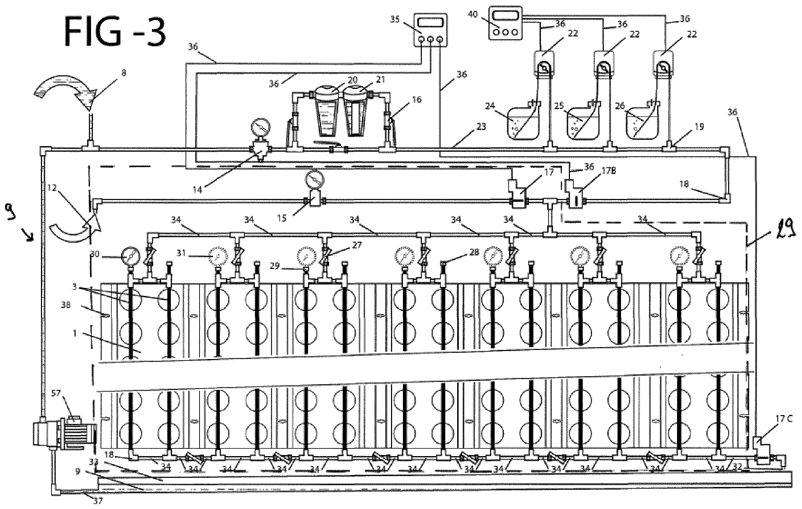

En référence à la figure 3, pour que le substrat comporte des bactéries et des champignons, le dispositif de dépollution comprend avantageusement un réservoir 25 de solution de champignons, comme par exemple le *Phanerochaete chrysosporium,* et un réservoir de solution 26 de bactéries aérobies vivantes.

Le dispositif de dépollution comprend en outre une pompe micro-doseuse 22 adaptée pour faire circuler l'une ou l'autre solution vers le substrat.

Avantageusement, le dispositif peut également comprendre un réservoir 24 de solution d'engrais, également distribué au moyen d'une pompe micro-doseuse.

Ainsi, dans un premier temps, une fois les plantes en place dans le mur végétal, c'est-à-dire plantées dans le substrat au travers d'un orifice 39 de la paroi 1, une solution d'engrais 24 est inoculée par une pompe micro doseuse 22 afin que le tissu racinaire se densifie dans le substrat. Puis le substrat est ensemencé de bactéries aérobies vivantes injectées sous forme soluble depuis le réservoir 26 par une pompe micro-doseuse 22. Les champignons sont injectés sous forme soluble depuis le réservoir 25 par une autre pompe micro-doseuse 22.

### Circuits d'irrigation et de ventilation

En référence à la figure 3, on va maintenant décrire les circuits d'irrigation 9 et de ventilation 29.

Le circuit de ventilation 29 comprend une arrivée d'air pollué 12 aspiré à raison de 2 à 3 m³ / heure par m² de mur végétal par une ou plusieurs pompes à air (non représentées) à partir d'une source d'air pollué, c'est-à-dire un local pollué fermé, ce dernier pouvant varier en déplaçant la source de l'aspiration. Ceci permet par exemple de dépolluer une salle de classe la journée et un gymnase le soir par un mur végétal situé dans le hall d'un même édifice et ce pour des raisons esthétiques.

Le circuit de ventilation 29 comprend un réseau de tubes 34, reliés à l'arrivée d'air 12 par des coudes 18 et des tés 19, et une pluralité de conduits d'alimentations 3 raccordés chacun aux tubes 34, et s'étendant chacun dans une cavité d'un module 10 et débouchant dans cette cavité par au moins une ouverture.

Chaque conduit d'alimentation s'étend verticalement depuis l'ouverture à l'extrémité supérieure d'un module jusqu'à sa base, en traversant le sac de substrat. Les conduits d'alimentation sont également raccordés entre eux au niveau de leur extrémité à la base du module par un ensemble de tubes 34.

Les tubes 34 sont de préférence semi-rigides afin d'offrir la souplesse nécessaire pour pouvoir épouser un mur courbe le cas échéant, comme c'est le cas sur la figure 6.

De préférence, chaque emplacement dans une cavité en regard d'un orifice 39 de la paroi du module pour placer une plante est traversé par un seul conduit d'alimentation 3. Dans le mode de réalisation représenté sur la figure 3, chaque module comporte deux séries verticales d'orifices 39, et deux conduits d'alimentation s'étendant verticalement sur toute la hauteur du module. De ce fait, des tés sont utilisés pour pouvoir raccorder chaque conduit 3 à l'arrivée d'air.

L'air pollué est de préférence injecté dans les conduits d'alimentation 3 à une pression entre 2 et 3 bars (selon la taille du réseau et du mur). Le circuit de ventilation comporte un régulateur de pression 15 permettant de réguler la pression de l'air dans le circuit de ventilation.

Avantageusement, le circuit de ventilation 29 comprend en outre un robinet 27 en entrée de chaque module, c'est-à-dire en amont du ou des conduits d'alimentation s'étendant dans la cavité interne d'un module. Ceci permet d'isoler sélectivement chaque module, par exemple pour une opération de maintenance. Un manomètre amovible 30, visible sur les figures 3 et 6, peut être placé au sommet de chaque conduit d'alimentation 3 pour assurer un contrôle aisé en cas de fuite. Le manomètre peut être déplacé de colonne en colonne pour la maintenance du réseau, comme représenté par les autres emplacements 31 du manomètre illustrés en pointillés.

Les conduits d'alimentation au sommet desquels il n'y a pas de manomètre sont fermés par un bouchon 28.

Avantageusement, mais non limitativement, chaque conduit d'alimentation 3 est un tube micro-poreux, c'est-à-dire qui comprend une série de micro-perforations réparties sur toute sa circonférence et toute sa longueur. Le caractère micro-poreux peut provenir du matériau utilisé pour le tube (le tube est par exemple en caoutchouc micro-poreux, tel qu'un caoutchouc aggloméré obtenu à partir de pneus recyclés) ou de micro-perforations pratiquées dans la paroi du tube.

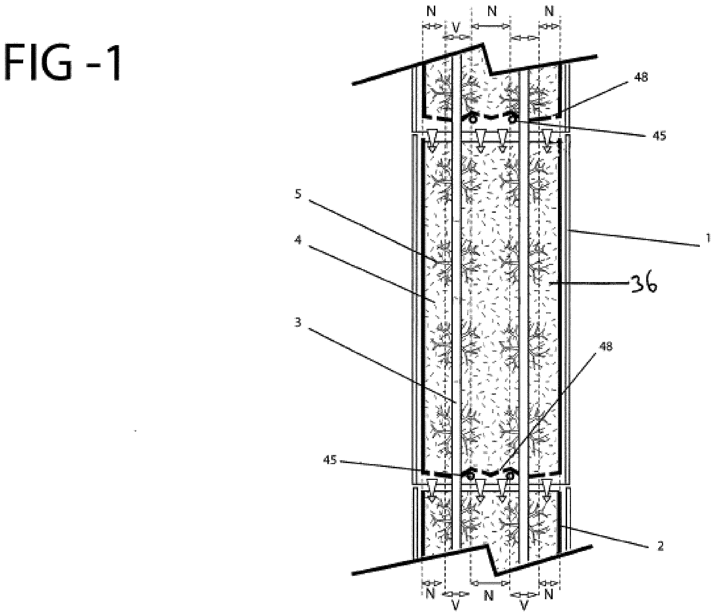

L'air pollué est ainsi injecté sous forme de micro-bulles 13 d'air (lesdites bulles présentant un diamètre inférieur ou égal à environ 1 mm de diamètre) sur toute la longueur du tube 3. Ceci crée, en référence à la figure 1, des zones ventilées V autour d'un tube 3, et des zones neutres N entre les zones ventilées.

Les bactéries et les champignons vont se multiplier dans le substrat lorsque celui-ci va être ventilé par les micro-bulles d'air 13 chargées de COV.
Les bactéries aérobies vont se répartir selon leur besoin en air dans ou entre les zones ventilées (V) et les zones neutres (N). Les champignons vont également se développer dans leur zone de prédilection. Aussi quelques soient les micro-organismes choisis, ces derniers resterons dans la zone la plus propice à leur développement, tant qu'il y aura des COV dans les micro-bulles.

De retour à la figure 3, le circuit d'irrigation 9 comprend une arrivée d'eau 8 type arrivée d'eau courante avec une pression de préférence supérieure ou égale à 2 bar, puisqu'en-dessous de cette pression un surpresseur est nécessaire

Le circuit d'irrigation 9 comprend un régulateur de pression anti coup de bélier 14, assurant une pression constante dans le réseau proche des 2 bars pour diffuser ainsi une quantité d'eau précise dans les modules.

Le circuit d'irrigation 9 comporte un dispositif de filtrage en contournement du circuit principal comprenant un filtre anti particules fines 20 et un filtre anti calcaire 21. Trois vannes 16 permettent, par leur ouverture et fermeture sélective, de diriger l'écoulement d'eau vers les filtres ou de les contourner. Les vannes 16 permettant en particulier de changer les cartouches des filtres.
L'eau s'écoule ensuite dans un conduit rigide 23, par exemple en PVC. Les réservoirs décrits ci-avant de solution d'engrais, de bactéries et de champignons sont raccordés à ce conduit par trois tés 19 où sont connectées les trois pompes micro-doseuse pilotées par une unité de commande 40. Ceci permet d'injecter sélectivement dans l'eau du réseau les solutions des réservoirs 24, 25, 26 à des moments clés définis précédemment.

Avantageusement, le circuit d'irrigation 9 et le circuit de ventilation 29 comprennent des parties communes, et notamment les conduits d'alimentation microporeux 3. A cet égard, le circuit d'irrigation comporte deux électrovannes 17, 17B couplées en inversion, c'est-à-dire que lorsqu'une est ouverte l'autre est fermée et réciproquement. La première électrovanne 17 est interposée entre l'arrivée d'air 12 et les tubes semi-rigides 34, et la deuxième 17B est interposée entre le conduit 23 raccordé aux réservoirs de solutions et les tubes semi-rigides.

Ces électrovannes sont commandées par une unité de contrôle 35 pour sélectivement autoriser la circulation d'air ou de l'eau, éventuellement enrichie en solution(s) vers les modules.

La quantité d'eau pour 1m² de mur végétal est de l'ordre de 6 litres d'eau tous les vingt jours afin que les plantes s'épanouissent convenablement.

Le circuit d'irrigation comporte en outre une électrovanne 17C en fin de réseau, c'est-à-dire à l'extrémité des tubes semi-rigides à la base des modules. Cette électrovanne permet de vidanger le réseau de ses fluides liquides lorsque l'alimentation en eau d'un module est interrompue pour permettre l'arrivée d'air. L'unité de contrôle 35 temporise les ouvertures et fermetures des trois électrovannes afin que le réseau puisse fournir aux racines des plantes 5 une alternance d'air pollué et au minimum 6 litres d'eau au m² / 20 jours.

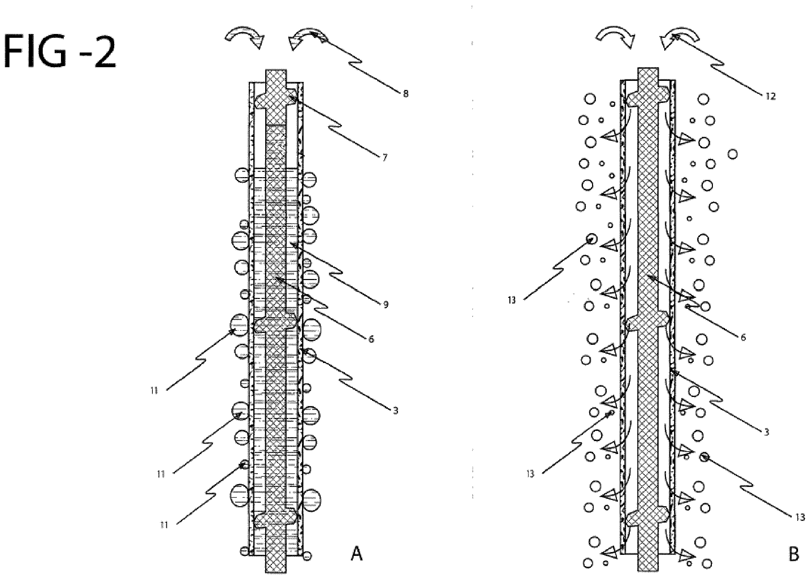

En référence aux figures 2a et 2b, le circuit d'irrigation comporte en outre au moins une corde imputrescible, ou une mèche humidifiée 6 qui est disposée à l'intérieur de chaque conduit d'alimentation microporeux 3. Ainsi, sur la figure 2a, lorsque le conduit d'alimentation 3 est alimenté avec de l'eau, des gouttes 11 sortent du conduit microporeux pour irriguer le substrat, et en même temps la corde est humidifiée.
Lorsqu'ensuite, sur la figure 2b, le conduit d'alimentation 3 est utilisé pour ventiler le substrat en faisant passer de l'air, des micro-bulles 13 d'air sortent dudit conduit afin de créer les zones ventilées V. La corde imputrescible 6 conserve de l'eau qui va doucement s'évaporer au passage de l'air, rendant ce dernier humide afin d'éviter un assèchement prématuré des racines 5 des plantes (représentées sur la figure 1). Cet air humide favorise la condensation entre les zones ventilées V et les zones neutres N.

De plus, la corde 6 comporte avantageusement des noeuds 7 tels que la corde présente au niveau des noeuds un diamètre égal au diamètre intérieur du conduit, permettant que celle-ci garde sa position dans le conduit d'alimentation micro-poreux, ou tout autre conduit configuré pour générer des microbulles, 3. De préférence, la corde 6 comporte à sa base un nœud plus gros en vue de la maintenance, qui consiste à changer de tuyaux micro-poreux, ou tout autre conduit configuré pour générer des microbulles, sans démonter la structure et qui sera décrite plus en détails ci-après.
Enfin le circuit d'irrigation comporte avantageusement un conduit d'évacuation 37 adapté pour récupérer les fluides rassemblés dans la gouttière 33 et pour les réinjecter dans le réseau avec l'arrivée d'eau 8 au moyen d'une pompe de relevage 57.

La gouttière 33 récupère les fluides suivants :
- L'excédent d'arrosage
- L'eau de condensation non récupérée par les plantes
- La vidange des tuyaux micro-poreux, ou de tout autre tuyau configuré pour générer des microbulles, 3(FIG-3) lorsque l'électrovanne 17C est ouverte.
   Le conduit d'évacuation 37 récupère tous ces fluides qui peuvent encore contenir des COV solubles dans l'eau, pour les réinjecter.

### La maintenance

Les fentes de fixation ajustables permettent de changer un module sans démonter les modules adjacents en desserrant simplement les vis de fixation 46 et en retirant les entretoises dudit module 10.

En référence à la figue 9, le changement des conduits d'alimentation microporeux 3 est facilité par la corde 6 accessible en démontant simplement les tés situés aux extrémités desdits conduits 3.
A l'autre extrémité de la corde on monte avantageusement une scie cloche tubulaire 51. En tirant et en exerçant une rotation de la corde (dans le mandrin d'une visseuse par exemple) les racines 5 des plantes sont coupées en libérant les résistances mécaniques retenant le conduit 3.
Ce dernier, rigidifié par la corde, peut être extrait sans tuer les plantes qui n'auront subit qu'une taille des racines minimales complétée par une taille légère de la partie foliaire des plantes, afin de rééquilibrer l'évapotranspiration de ces dernières.

### FONCTIONEMENT DU DISPOSITIF

Comme expliqué précédemment le dispositif se compose d'une structure faite d'un assemblage de modules 10. Une fois assemblés et fixés à un mur capable de supporter le poids dudit assemblage, des sacs 2 sont remplis de substrat 4, puis ils sont introduits dans les cavités internes des modules par leur ouverture supérieure.

Après le positionnement de l'irrigation/ventilation, les sacs sont découpés comme décrit ci-avant, pour la mise en place des plantes.

Comme expliqué précédemment le dispositif utilise des conduits d'alimentation micro-poreux, ou tout autre conduit configuré pour générer des microbulles, 3 pour l'irrigation et la ventilation grâce à un ensemble de trois électrovannes 17, 17B, 17C pilotées par l'unité de contrôle 35.

Le substrat est ensuite enrichi en micro-organismes aérobies, bactéries et champignons solubles qui sont injectés dans le substrat par l'intermédiaire de pompes micro-doseuses. Le cas échéant, les nutriments nécessaires à la croissance des plantes y sont également injectés (dans le cas où le substrat choisi ne contient pas suffisamment de nutriments) par une autre pompe. Par la suite, de l'eau suffit, l'écosystème fabricant son propre engrais.

L'eau arrive dans le circuit d'irrigation, où chaque conduit d'alimentation microporeux 3 délivre la quantité souhaitée de liquide aux modules 10.

Le liquide imbibe le substrat situé dans le sac 2 du module supérieur 10. Lorsque le substrat arrive à saturation d'absorption, l'excédent s'écoule par gravité par les percements 48 au fond du sac. Ces percements coïncident avec l'embouchure du sac 2 du module suivant, ces derniers étant placés les uns au-dessus des autres. Arrivé au dernier sac le liquide termine sa course, dans la gouttière 33. Dans un second temps le liquide est réinjecté par la pompe de relevage 57 dans le réseau fermant ainsi le circuit d'irrigation.

La disposition des conduits d'alimentation microporeux 3 à double fonction crée dans chaque module des zones plus ou moins ventilées où un grand nombre de bactéries aérobies peuvent se développer en symbiose avec la plante ainsi qu'un grand nombre de champignons aérobies qui vivent en symbiose avec les bactéries optimisant ainsi la cométabolisation.
Les zones neutres sont propices au développement racinaire des plantes 41 qui fabriqueront les radicelles 5 essentielles à la vie et au développement des plantes. Les zone ventilées distillant de manière continue (sauf en cycle d'arrosage) des micro-bulles d'air chargées en COV qui viennent nourrir les bactéries créant ainsi un cosubstrat pour les champignons qui fabriqueront à leur tour les nutriments indispensables à la croissance des plantes. L'invention crée l'environnement idéal à cet écosystème qui au final transforme les polluants en engrais de manière fiable et pérenne.

### FABRICATION DU DISPOSITIF

Chaque module 10 est conçu pour créer un choc thermique. C'est pourquoi, les matériaux composant les modules de bases sont de préférence métalliques. Parmi les métaux on notera une préférence pour l'acier, l'acier galvanisé, l'inox et l'aluminium.

Le module de base est réalisé avec les outils de tôlerie standard, découpage, pliage dans un but de réduction des coûts et dans le fait d'utiliser des matériaux recyclés. La répétition du motif de percement, permet une fabrication linéaire du module avec un coût d'outillage réduit quel que soit la longueur du module choisi.

Dans un mode de réalisation extrêmement économique on peut utiliser un bardage standard, du type 3-45-1000 ou similaire (utilisé habituellement pour les palissades de chantier ou en toitures industrielles) qui comporte trois plis ; en découpant les trous pour le passage des plantes on obtient la même configuration que trois modules adjacents.
De plus on peut utiliser la découpe laser qui reste très économique sur de petites séries.

Les fixations des différents éléments entre eux se font par des vis, dans le but d'avoir des modules de petites tailles facile à transporter et à stocker et surtout empilable.

### CONCLUSION : AVANTAGES DU DISPOSITIF CONFORME A L'INVENTION

La présente invention révèle, un dispositif multi-substrat à "large spectre dépolluant" sans résidu. La cométabolisation permet de transformer les COV en biomasse pour les plantes.

Elle présente de nombreux avantages pour dépolluer toutes sortes de locaux. De par sa conception économique et son rendu esthétique (espace vert) ce bio-filtre permet de débarrasser l'air intérieur de nos bâtiments des COV. Aussi les architectes peuvent intégrer ladite invention dans leur projet avec une grande liberté (mur droit ou courbe) afin de répondre au CCTP. Tout en valorisant la surface d'espace vert dans leur projet et ce sans emprise au sol. De plus les plantes piègent le CO₂ et libèrent de l'O₂ améliorant la qualité de l'air.

On peut aisément changer de substrat ou de plante, ou avoir des plantes et des substrats différents sur une même installation, ainsi qu'un large panel de bactéries et champignons pour répondre au mieux à chaque cas de pollution par des COV.

La forme du module de base dans son principe, permet d'être empilable au stockage et au transport. Les modules sont manipulables par une seule personne.

La forme linéaire des modules permet une industrialisation sous forme de ligne de production, permettant des économies substantielles au niveau de la fourniture et de la façon.

La perforation industrielle des modules permet de faire du lettrage végétal. Pour écrire en plantes vivantes un mot, une marque, un nom, un logo ou un motif architectonique.
La présente invention offre un cadre de développement idéal pour un large choix de plantes, bactéries et champignons, tout en restant particulièrement esthétique. En effet l'invention se présente visuellement comme un mur végétal, qu'un paysagiste peut composer comme un jardin vertical.

Le dispositif décrit précédemment peut également être mis en oeuvre horizontalement, notamment sous forme de plantations. Cependant, ce mode de réalisation occupe une plus grande surface au sol, contrairement au mode de réalisation vertical, privilégié.
De plus, le dispositif décrit peut aussi bien être implémenté à l'extérieur d'un bâtiment qu'à l'intérieur, comme détaillé précédemment.

## Revendications

1. Dispositif de dépollution d'air, comprenant :
- au moins un module (10) de culture de végétaux, chaque module comprenant au moins une paroi (1) apte à être fixée à un mur vertical (50), et une cavité interne (36),
- un substrat (4) apte à être placé dans la cavité interne du module, et
- un circuit d'irrigation du substrat (9) adapté pour acheminer de l'eau dans la cavité interne (36) du module (10),
- un circuit de ventilation (29) du substrat adapté pour prélever de l'air pollué d'une source d'air pollué et pour acheminer l'air pollué dans la cavité interne (36) du module (10),
- un conduit d'alimentation (3) s'étendant dans la cavité interne (36) d'un module (10) en débouchant dans ladite cavité par au moins un orifice, définissant autour dudit orifice une zone dite ventilée (V) tandis que le reste de la cavité est une zone dite neutre (N), ledit conduit d'alimentation étant commun au circuit d'irrigation et au circuit de ventilation, et
- une mèche humidifiée (6) ou une corde (6) à noeuds (7) imputrescible disposée dans le conduit d'alimentation (3),
le dispositif étant **caractérisé en ce que** le conduit d'alimentation (3) est un tuyau configuré pour générer des micro-bulles d'air pollué humide de manière à ventiler la zone ventilée.

2. Dispositif de dépollution d'air selon la revendication 1, dans lequel le substrat (4) comporte :
- une base nutritive, et
- des micro-organismes adaptés pour dégrader des composés organiques volatiles contenus dans de l'air en nutriments pour la croissance des plantes, lesdits micro-organismes comprenant des bactéries et/ou des champignons.

3. Dispositif de dépollution d'air selon les revendications 1 à 2, **caractérisé en ce que** chaque conduit d'alimentation (3) est un tube microporeux.

4. Dispositif de dépollution d'air selon la revendication 3, dans lequel le circuit d'irrigation comprend en outre un réservoir (25) de solution de bactéries aérobies et un réservoir (26) de solution de champignons, et le dispositif de dépollution d'air comprend en outre une unité de contrôle (35) adaptée pour sélectivement faire circuler dans le conduit d'alimentation au moins l'un parmi le groupe comprenant :
- de l'eau,
- de l'air pollué prélevé de la source,
- de la solution de champignons solubles,
- de la solution de bactéries aérobies solubles.

5. Dispositif de dépollution d'air selon l'une des revendications précédentes, dans lequel chaque module (10) comporte, de part et d'autre de la paroi, deux platines de fixation de largeur différentes (44 et 43) pour la fixation au mur vertical.

6. Dispositif de dépollution d'air selon la revendication 5, dans lequel chaque platine (43, 44) comprend une au moins une fente (38) s'étendant sur toute la largeur de la platine.

7. Dispositif de dépollution d'air selon l'une des revendications précédentes, dans lequel le substrat (4) est contenu dans un sac (2) formé d'une paroi étanche et opaque, le sac pouvant être positionné de manière amovible dans la cavité interne d'un module (10).

8. Dispositif de dépollution d'air selon l'une des revendications précédentes, comprenant au moins deux modules (10) joints bord à bord horizontalement, dans lequel la paroi de chaque module comprend une pluralité d'ouvertures traversantes (39) adaptées pour autoriser la croissance de plantes hors de la cavité interne du module, deux ouvertures (39) adjacentes horizontalement d'un même module étant distantes d'une distance constante (C), et dans lequel la distance (C') entre deux ouvertures adjacentes horizontalement de deux modules consécutifs est inférieure ou égale à la distance (C) entre les ouvertures d'un même module.

9. Dispositif de dépollution d'air selon l'une des revendications précédentes, comprenant une pluralité de modules (10) assemblés les uns au-dessus des autres, chaque module (10) comprenant un sac (2) rempli de substrat (4), le fond du sac (2) étant perforé pour autoriser l'écoulement de fluide d'un module à l'autre, et le dispositif comprend en outre une gouttière (33) de récupération disposée en-dessous du module inférieur.

10. Procédé d'installation d'un dispositif de dépollution d'air selon l'une des revendications 1 à 9, dans lequel la paroi (1) de chaque module (10) comporte une pluralité d'ouvertures (39) circulaires traversantes adaptées pour autoriser la croissance de plantes hors de la cavité interne d'un module, et le substrat (4) est contenu dans un sac (2) étanche, le procédé comprenant :
- la mise en place d'un sac (2) de substrat (4) dans la cavité interne d'un module (10),
- l'incision du sac (2) de substrat au niveau de chaque ouverture (39) de la paroi du module et le retrait, par chaque ouverture (39) de la paroi, d'une portion semi-circulaire de la paroi du sac en regard d'une moitié supérieure de l'ouverture correspondante, et
- la déformation de la paroi du sac (2) pour former, au travers de chaque ouverture (39) de la paroi (1), une poche en surplomb de ladite paroi (1).

11. Procédé de dépollution d'air à l'aide d'un dispositif de dépollution d'air selon l'une des revendications 1 à 9, dans lequel la paroi (1) de chaque module (10) comporte une pluralité d'ouvertures (39) circulaires traversantes adaptées pour autoriser la croissance de plantes hors de la cavité interne d'un module, et le substrat (4) est contenu dans un sac (2) étanche, le procédé consistant à injecter de l'air pollué à partir de la source d'air pollué dans le circuit de ventilation, à une pression prédéterminée de sorte à créer à l'intérieur du substrat (4) d'une part une zone ventilée (V) dans laquelle l'air pollué issu du circuit de ventilation circule dans le substrat (4) sous la forme de micro-bulles, et d'autre part une zone neutre (N) dans laquelle l'air pollué issu du circuit de ventilation ne circule pas dans le substrat (4).

## Patentansprüche

1. Vorrichtung zur Reinigung von Luft, umfassend:
- mindestens ein Pflanzenkulturmodul (10), wobei jedes Modul mindestens eine Wand (1) umfasst, die zur Befestigung an einer vertikalen Mauer (50) geeignet ist, und einen inneren Hohlraum (36),
- ein Substrat (4), das zum Platzieren in den inneren Hohlraum des Moduls geeignet ist, und
- einen Bewässerungskreis des Substrats (9), der zur Beförderung von Wasser in den inneren Hohlraum (36) des Moduls (10) geeignet ist,
- einen Belüftungskreis (29) des Substrats, der zur Entnahme von verschmutzter Luft aus einer Quelle verschmutzter Luft und zur Beförderung der verschmutzten Luft in den inneren Hohlraum (36) des Moduls (10) geeignet ist,
- eine Versorgungsleitung (3), die sich in den inneren Hohlraum (36) eines Moduls (10) erstreckt und dabei in den Hohlraum durch mindestens eine Öffnung ausmündet und dabei um die Öffnung eine so genannte belüftete Zone (V) definiert, wohingegen der Rest des Hohlraums eine so genannte neutrale Zone (N) ist, wobei die Versorgungsleitung mit dem Bewässerungskreis und dem Belüftungskreis gemeinsam ist, und
- einen feuchten Drain (6) oder eine unverwesliche Schnur (6) mit Knoten (7), der/die in der Versorgungsleitung (3) angeordnet ist,
wobei die Vorrichtung **dadurch gekennzeichnet ist, dass** die Versorgungsleitung (3) ein Rohr ist, das konfiguriert ist, um Mikroblasen feuchter verschmutzten Luft derart zu erzeugen, dass die belüftete Zone belüftet wird.

2. Vorrichtung zur Reinigung von Luft nach Anspruch 1, wobei das Substrat (4) aufweist:
- eine nährende Basis, und
- Mikroorganismen, die zum Abbau der flüchtigen organischen Bestandteile, die in der Luft enthalten sind, in Nutrimente für das Wachstum der Pflanzen geeignet sind, wobei die Mikroorganismen Bakterien und/oder Pilze umfassen.

3. Vorrichtung zur Reinigung von Luft nach den Ansprüchen 1 bis 2, **dadurch gekennzeichnet, dass** jede Versorgungsleitung (3) ein mikroporöses Rohr ist.

4. Vorrichtung zur Reinigung von Luft nach Anspruch 3, wobei der Bewässerungskreis ferner einen Vorratsbehälter (25) mit Lösung aerober Bakterien und einen Vorratsbehälter (26) mit Pilzlösung umfasst und die Vorrichtung zur Reinigung von Luft ferner eine Steuereinheit (35) umfasst, die geeignet ist, um in der Versorgungsleitung mindestens eins von der Gruppe zirkulieren zu lassen, die umfasst:
- Wasser,
- der Quelle entnommene verschmutzte Luft,
- Lösung mit löslichen Pilzen,
- Lösung mit löslichen aeroben Bakterien.

5. Vorrichtung zur Reinigung von Luft nach einem der vorangehenden Ansprüche, wobei jedes Modul (10) beiderseits der Wand zwei unterschiedliche breite Befestigungsplatten (44 und 43) für die Befestigung an der vertikalen Mauer aufweist.

6. Vorrichtung zur Reinigung von Luft nach Anspruch 5, wobei jede Platte (43, 44) mindestens einen Schlitz (38) umfasst, der sich über die gesamte Breite der Platte erstreckt.

7. Vorrichtung zur Reinigung von Luft nach einem der vorangehenden Ansprüche, wobei das Substrat (4) in einem Behältnis (2) enthalten ist, gebildet aus einer dichten und opaken Wand, wobei das Behältnis lösbar in dem inneren Hohlraum eines Moduls (10) positionierbar ist.

8. Vorrichtung zur Reinigung von Luft nach einem der vorangehenden Ansprüche, umfassend mindestens zwei Module (10), die horizontal Rand an Rand verbunden sind, wobei die Wand jedes Moduls eine Vielzahl von Durchgangsöffnungen (39) umfasst, die geeignet sind, das Wachstum von Pflanzen aus dem inneren Hohlraum des Moduls zu gestatten, wobei zwei horizontal benachbarte Öffnungen (39) desselben Moduls in einem konstanten Abstand (C) beabstandet sind und wobei der Abstand (C') zwischen zwei horizontal benachbarten Öffnungen von zwei aufeinanderfolgenden Modulen kleiner als der oder gleich dem Abstand (C) zwischen den Öffnungen desselben Moduls ist.

9. Vorrichtung zur Reinigung von Luft nach einem der vorangehenden Ansprüche, umfassend eine Vielzahl von Modulen (10), die übereinander verbunden sind, wobei jedes Modul (10) ein mit Substrat (4) gefülltes Behältnis (2) umfasst, wobei der Boden des Behältnisses (2) perforiert ist, um das Fließen von Fluid von einem Modul zum anderen zu gestatten, und die Vorrichtung ferner eine Rückgewinnungsrinne (33) umfasst, die unter dem unteren Modul angeordnet ist.

10. Verfahren zur Installation einer Vorrichtung zur Reinigung von Luft nach einem der Ansprüche 1 bis 9, wobei die Wand (1) jedes Moduls (10) eine Vielzahl runder Durchgangsöffnungen (39) aufweist, die geeignet sind, das Wachstum von Pflanzen aus dem inneren Hohlraum eines Moduls zu gestatten, und das Substrat (4) in einem dichten Behältnis (2) enthalten ist, wobei das Verfahren umfasst:
- das Platzieren eines Behältnisses (2) mit Substrat (4) in den inneren Hohlraum eines Moduls (10),
- das Einschneiden des Behältnisses (2) mit Substrat im Bereich jeder Öffnung (39) der Wand des Moduls und das Entnehmen, durch jede Öffnung (39) der Wand, einer halbrunden Portion der Wand des Behältnisses gegenüber einer oberen Hälfte der entsprechenden Öffnung, und
- das Verformen der Wand des Behältnisses (2), um durch jede Öffnung (39) der Wand (1) eine über die Wand (1) überhängende Tasche zu bilden.

11. Verfahren zur Reinigung von Luft mit Hilfe einer Vorrichtung zur Reinigung von Luft nach einem der Ansprüche 1 bis 9, wobei die Wand (1) jedes Moduls (10) eine Vielzahl runder Durchgangsöffnungen (39) aufweist, die geeignet sind, das Wachstum von Pflanzen aus dem inneren Hohlraum eines Moduls zu gestatten, und das Substrat (4) in einem dichten Behältnis (2) enthalten ist, wobei das Verfahren darin besteht, verschmutzte Luft ausgehend von der Quelle verschmutzter Luft in den Belüftungskreis mit einem vorher festgelegten Druck einzuleiten, so dass im Inneren des Substrats (4) zum einen eine belüftete Zone (V) geschaffen wird, in welcher die verschmutzte Luft aus dem Belüftungskreis in dem Substrat (4) in Form von Mikroblasen zirkuliert, und zum anderen eine neutrale Zone (N), in welcher die verschmutzte Luft aus dem Belüftungskreis nicht in dem Substrat (4) zirkuliert.

## Claims

1. An air pollution control device, comprising:
- at least one module (10) for growing plants, each module comprising at least one panel (1) able to be fixed to a vertical wall (50), and an inner cavity (36),
- a substrate (4) able to be placed in the inner cavity of the module, and
- a circuit (9) for irrigating the substrate adapted to convey water into the inner cavity (36) of the module (10),
- a circuit (29) for ventilating the substrate adapted to take polluted air from a source of polluted air and to convey the polluted air into the inner cavity (36) of the module (10),
- a supply duct (3) extending into the inner cavity (36) of a module (10) by opening into said cavity through at least one orifice, defining around said orifice an area called ventilated area (V) while the rest of the cavity is an area called neutral area (N), said supply duct being common to the irrigation circuit and to the ventilation circuit, and
- a moistened wick (6) or a rot-proof knot (7) rope (6) disposed in the supply duct (3),
the device being **characterized in that** the supply duct (3) is a pipe configured to generate micro-bubbles of humid polluted air so as to ventilate the ventilated area.

2. The air pollution control device according to claim 1, wherein the substrate (4) includes:
- a nutrient base, and
- microorganisms adapted to degrade volatile organic compounds contained in air into nutrients for the growth of the plants, said microorganisms comprising bacteria and/or fungi.

3. The air pollution control device according to claims 1 to 2, **characterized in that** each supply duct (3) is a micro-porous tube.

4. The air pollution control device according to claim 3, wherein the irrigation circuit further comprises a reservoir (25) for aerobic bacteria solution and a reservoir (26) for fungi solution, and the air pollution control device further comprises a control unit (35) adapted to selectively circulate in the supply duct at least one among the group comprising:
- water,
- polluted air taken from the source,
- soluble fungi solution,
- soluble aerobic bacteria solution.

5. The air pollution control device according to any of the preceding claims, wherein each module (10) includes, on either side of the panel, two fixing plates of different widths (44 and 43) to be fixed to the vertical wall.

6. The air pollution control device according to claim 5, wherein each plate (43, 44) comprises at least one slot (38) extending over the entire width of the plate.

7. The air pollution control device according to any of the preceding claims, wherein the substrate (4) is contained in a bag (2) formed of a sealed and opaque lining, the bag being able to be removably positioned into the inner cavity of a module (10).

8. The air pollution control device according to any of the preceding claims, comprising at least two modules (10) horizontally joined edge-to-edge, wherein the panel of each module comprises a plurality of through-openings (39) adapted to allow the growth of plants outside the inner cavity of the module, two horizontally adjacent openings (39) of the same module being separated by a constant distance (C), and wherein the distance (C') between two horizontally adjacent openings of two consecutive modules is lower than or equal to the distance (C) between the openings of the same module.

9. The air pollution control device according to any of the preceding claims, comprising a plurality of modules (10) assembled above each other,
each module (10) comprising a bag (2) filled with substrate (4), the bottom of the bag (2) being perforated to allow the flow of fluid from one module to the other, and the device further comprises a collection gutter (33) disposed below the lower module.

10. A method for installing an air pollution control device according to any of claims 1 to 9, wherein the panel (1) of each module (10) includes a plurality of circular through-openings (39) adapted to allow the growth of plants outside the inner cavity of a module, and the substrate (4) is contained in a sealed bag (2), the method comprising:
- placing a substrate (4) bag (2) into the inner cavity of a module (10),
- incising the substrate bag (2) at each opening (39) of the panel of the module and removing, through each opening (39) of the panel, a semi-circular portion of the lining of the bag opposite an upper half of the corresponding opening, and
- deforming the lining of the bag (2) to form, through each opening (39) of the panel (1), a pouch overhanging said panel (1).

11. An air pollution control method using an air pollution control device according to any of claims 1 to 9, wherein the panel (1) of each module (10) includes a plurality of circular through-openings (39) adapted to allow the growth of plants outside the inner cavity of a module, and the substrate (4) is contained in a sealed bag (2), the method consisting in injecting polluted air from the source of polluted air into the ventilation circuit at a predetermined pressure so as to create inside the substrate (4), on the one hand, a ventilated area (V) in which the polluted air coming from the ventilation circuit circulates into the substrate (4) in the form of micro-bubbles and, on the other hand, a neutral area (N) in which the polluted air coming from the ventilation circuit does not circulate into the substrate (4).
